# EUROPEAN PATENT APPLICATION

(11) **EP 4 559 856 A1**
(43) Date of publication of application: **28.05.2025**
(21) Application number: 23211752.3
(22) Date of filing: 23.11.2023
(51) Int. Cl.: B66C 1/10, B66C 13/08, B66C 23/18, B66C 23/52, F03D 80/50

(54) **HOLDING DEVICE AND METHOD FOR PLACING AN OBJECT ONTO AN OFFSHORE PLATFORM**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

The present invention relates to a holding device (1) for attaching an object (2) to a lifting device (3) and for placing the object (2) onto a platform (4) of an offshore wind turbine, comprising a main structure (5) for being attached to a lifting part (6) of the lifting device (3) and a plurality of holding ropes (7) for being attached to attachment spots (8) of the object (2), wherein the holding ropes (7) are attached to the main structure (5) mutually spaced-apart. The holding ropes (7) of the plurality of holding ropes (7) are attached to the main structure (5) by a plurality of winches (9), wherein the winches (9) are configured for being operated independently by a control device (10), wherein the control device (10) is configured to operate the winches (9) in a way to compensate a swinging movement of the lifting device (3). The invention also relates to a method for placing an object (2) onto a platform (4) of an offshore wind turbine.

## Description

The present invention relates to a holding device for attaching an object to a lifting device and for placing the object onto a platform of an offshore wind turbine. The holding device comprises a main structure for being attached to a lifting part of the lifting device and a plurality of holding ropes for being attached to attachment spots of the object. The holding ropes are attached to the main structure mutually spaced-apart. The invention also relates to a method for placing an object onto a platform of an offshore wind turbine.

Offshore wind turbines comprise a plurality of components and devices, which are arranged on a platform of a tower of the wind turbine. The components can be, e.g., in the form of a skid or container. Within the scope of this invention, such components, devices, aggregates or the like are denoted as *"objects".*

For offshore wind turbine applications, such objects are usually transported to the vicinity of the wind turbine by a vessel and placed onto the platform by a crane, e.g., which is mounted on the vessel.

A problem for the placement procedure is an unwanted relative movement of the object to be placed and the platform due to external disturbances like swell and squall. There are basically two known different methods for placing the object under such offshore circumstances safely.

According to a first method, a jack up vessel is used. A jack up vessel can be lifted out of the water by a mobile framework, which can be deployed onto the seabed. Thus, the vessel and the crane, which is mounted to the vessel, are decoupled from the swell. According to a second method, a heave compensated crane is used. Such heave compensated cranes have high-tech electrical equipment for providing the necessary movement to compensate the swell and squall.

Known devices and methods for placing an object onto a platform of an offshore wind turbine have the disadvantage that the operational costs are relatively high, e.g., compared to a standard ship without a jack up function and with a normal crane that does not provide heave compensation. Moreover, the availability of such special ships is relatively low. Therefore, parallelization of certain offshore maintenance processes, which require heave compensation, is hardly possible. Beyond that, in case of a breakdown of such a ship, it can take a long time until a replacement ship is disposable. Jack up vessels have the additional disadvantage that squall compensation is not provided.

It is therefore the object of the present invention to eliminate or at least partially eliminate the disadvantages described above in the case of placing an object on a platform of an offshore wind turbine. In particular, it is the object of the present invention to create a device and a method for placing an object onto a platform of an offshore wind turbine, which have an improved flexibility and/or avoid such high operational costs in a simple and inexpensive manner.

The above object is achieved by the claims. Accordingly, the problem is solved by a holding device for attaching an object to a lifting device and for placing the object onto a platform of an offshore wind turbine with the features of independent claim 1 and by a method for placing an object on a platform of an offshore wind turbine with the features of subordinate claim 12. Further features and details of the invention emerge from the subclaims, the description and the drawings. Features and details that are described in connection with the holding device according to the invention naturally also apply in connection with the method according to the invention and vice versa, so that with regard to the disclosure of the individual aspects of the invention, reference is or can always be made to each other.

According to a first aspect of the invention, the object is achieved by a holding device for attaching an object to a lifting device and for placing the object onto a platform of an offshore wind turbine. The holding device comprises a main structure for being attached to a lifting part of the lifting device and a plurality of holding ropes for being attached to attachment spots of the object. The holding ropes are attached to the main structure mutually spaced-apart. According to the invention, the holding ropes of the plurality of holding ropes are attached to the main structure by a plurality of winches, wherein the winches are configured for being operated independently by a control device. The control device is configured to operate the winches in a way to compensate a swinging movement of the lifting device.

A lifting device can be configured, e.g., as a crane. The lifting device can comprise a wire with a crane hook at one end. Preferably, the crane is configured as a standard crane without means for heave compensation. In other words, the holding device can be used by standard lifting devices for saving investment and operational costs.

Within the scope of the invention, a holding device is considered as an intermediate device, which is configured for being interposed between the lifting device and the object to be lifted. The holding device comprises at least the main structure, the plurality of winches and the holding ropes for holding the object.

Preferably, the main structure is constituted by a plurality of beams, such as steel beams or the like. The beams can have a rectangular cross-section. Preferably, the beams are configured as O-profiles, screwed or welded together for constituting the main structure. The main structure is configured for being attached to the lifting device, e.g., to a hook or a band of the lifting device.

The holding ropes are configured for being attached to attachment spots of the object. For this purpose, the holding ropes may comprise attachment means, such as hooks, carabiner or the like for engaging eyes, slings or the like of the object or of an additional securing device, e.g., a rope, a wire, a skid or the like, for securing the object. The attachment means can be fixed to first end sections of the holding ropes. Preferably, the holding ropes have a circular or rectangular cross-section. Second end sections of the holding ropes are engaged with the winches. Preferably, the holding device comprises four holding ropes.

The winches are attached to the main structure, e.g., by bolts. The winches are configured for being operated independently by the control device. This means that, e.g., one of the winches can be moved up or down, while one or more of the other winches are idle, moved in another direction and/or with a different speed. Preferably, the holding device comprises four winches.

The control device is configured for operating the winches. The control device can be provided at a location different from the main structure and the winches, e.g., at the crane, a control center of the vessel, at the wind turbine, e.g., on the platform, or the like. Alternatively, the control device can be arranged at the main structure, the winches or any other part of the holding device. Preferably, the control device is configured for determining a relative movement of the object to the platform. Alternatively or additionally, the control device can be configured for detecting wave height, speed and direction. Alternatively or additionally, the control device can be configured for determining wind speed and wind direction. The control device can be configured to communicate with the winches by wire or wirelessly. An electricity supply for operating the winches can be provided by a cable. The cable can be connected to the crane and/or the vessel.

A holding device according to the invention has the advantage over conventional lifting devices that in a simple and inexpensive way, a heave compensation is provided. By operating the winches independently, the control device can compensate a relative movement of the lifting device to the offshore platform. Thus, expensive vessels with heave compensation cranes or jack up vessels can be replaced by standard vessels with standard cranes. Moreover, since the holding device can be manufactured at relatively low costs, the availability of the holding device is relatively high compared to standard offshore lifting solutions. Therefore, placing operations of different objects can be performed simultaneously by the use of more vessels.

According to a preferred further development of the invention, a holding device can provide that the main structure is configured as a frame, wherein the winches are arranged at corners of the main structure. The frame can have a rectangular shape with a longer side and a short side. The frame can be constituted by metal profiles. It is preferred that the metal profiles have a rectangular cross-section. Preferably, the winches are arranged at corner sections of the frame. Preferably, the frame has the projection plane of a standard 20 foot container or a standard 40 foot container. This has the advantage that in a simple and inexpensive way, a robust holding device is provided, which can be easily attached to a crane to provide a reliable heave compensation.

It is preferred according to the invention that the main structure comprises an adapter device for being coupled to a load hook of the lifting device. The adapter device can be configured as hooks, carabiner, eyes or the like for connecting to an interface of the lifting device, e.g., a plurality of lifting bands, hooks or the like. This has the advantage that in a simple and inexpensive way, a secure connection to a standard lifting device can be established easily.

More preferred, the control device is configured to operate the winches in a way to keep the main structure in a horizontal alignment. The horizontal alignment can be with respect to an imaginary flat surface of the sea without waves or the platform of the wind turbine. For establishing the horizontal alignment, the control device is configured for operating the winches independently to compensate a rocking motion of the vessel with the lifting device due to sea disturbance. Preferably, the control device is configured to place the object onto the platform in cooperation with the lifting device, e.g., with the lifting device holding the holding device in a constant relative position with regard to the lifting device or lowering the object in the direction of the platform. In both cases, the holding device can lower the object until it is arranged on the platform. This has the advantage that in a simple and inexpensive way, the deployment procedure of the object onto the platform can be improved.

In a particularly preferred embodiment of the invention, a generator and/or a battery is arranged at the main structure for providing the winches with electricity. Preferably, the generator and/or a battery is configured for providing the control device with electricity. By these means, the holding device can be provided with electricity even when the lifting device is idle or without electricity. No power cable or power interface for connecting the holding device with the vessel or the lifting device is needed anymore. Thus, the compatibility of the holding device is further increased. This has the advantage that in a simple and inexpensive way, the coupling process of the holding device to the lifting device is less complex. Moreover, heave compensation can be provided independently from an operational status of the lifting device and the vessel.

Preferably, the control device is arranged at the main structure. It is preferred that the control device is arranged inside a protective housing for being protected from environmental influence. Preferably, the protective housing is attached to a profile element of the main structure. Alternatively, the protective housing can be at least partly constituted by a profile element of the main structure. Thus, the control device can be arranged inside the profile element of the main structure. By these means, the control device is well protected. This has the advantage that in a simple and inexpensive way, the coupling process of the holding device to the lifting device is less complex. Moreover, the independence of the heave compensation of the holding device can be improved.

According to a preferred embodiment of the invention, a sensor is arranged at the main structure for detecting an environment of the main structure. It is preferred that two or more sensors are provided. Thus, a better detection of the relative orientation of the object to the platform is provided. Moreover, in a case of a breakdown of one sensor, a reliable detection of the environment of the main structure is still provided by the other sensors. The sensor is preferably connected to the control device. The sensor can be a radar sensor, a lidar sensor or the like. Preferably, more different sensors are provided in order to provide a reliable detection at different environmental conditions. This has the advantage that in a simple and inexpensive way, the heave compensation can be improved. Thus, a safer placement of the object onto the platform is provided.

Particularly preferred, the sensor is configured for detecting the object to be lifted and/or for detecting an environment of the object to be lifted. With the detection of the object to be lifted, the control device gets information on a relative position and/or movement of the object to the main structure. With the detection of the environment of the object, the control device gets information on a relative position and/or movement of the holding device to the platform, which is generally caused by the vessel due to sea disturbance. With this information, e.g., a swinging movement of the object can be compensated by operating the winches respectively. This has the advantage that in a simple and inexpensive way, the heave compensation can be improved. Thus, a safer placement of the object onto the platform is provided.

It is preferred according to the invention that the holding device comprises a sensing device for being attached to the object to be lifted, for sensing an alignment of the object to be lifted to a horizontal plane. Preferably, the sensing device is configured to sense a direction of gravity with respect to the orientation of the sensing device. It can be provided that the sensing device comprises an acceleration sensor. Further preferred, the sensing device is encapsulated to be protected from environmental influences, which could influence the measurements of the sensing device. For the attachment of the sensing device to the object, the sensing device can comprise a magnet, suction cup or the like. For a data transmission to the control device, the sensing device can have a wireless transmitter, a data cable, a data connector plug or the like. With the sensing device, the control device can be provided with further data for operating the winches. This has the advantage that in a simple and inexpensive way, the heave compensation can be improved. Thus, a safer placement of the object onto the platform is provided.

Preferably, the holding ropes comprise a steel wire and/or a dyneema rope. Such holding ropes are strong enough for lifting heavy loads and have a long durability. This has the advantage that in a simple and inexpensive way, a reliable operation of the holding device with less demand for maintenance is ensured.

Further preferred, the holding device comprises four holding ropes and four winches, wherein the winches are equally arranged at the main structure. For this configuration, the main structure is preferably rectangular with different side lengths. The winches are preferably arranged at the corner areas of the main structure. This has the advantage that in a simple and inexpensive way, the holding device is especially configured for holding objects with a rectangular face, such as containers, boxes, skids or the like.

According to a second aspect of the invention, the object is achieved by a method for placing an object onto a platform of an offshore wind turbine. The method comprises:
- Providing a lifting device with a holding device according to the first aspect of the invention,
- fixing the object to the plurality of holding ropes,
- lifting the holding device together with the object by the lifting device,
- moving the object above a deployment position by the lifting device,
- operating the winches by the control device to keep the object in a predetermined orientation with respect to the platform and
- placing the object onto the deployment position.

The holding device can be arranged at the lifting device, e.g., a hook, a carabiner, a rope or the like of the lifting device, before or after the object is fixed to the holding device. The object is fixed to the holding ropes, e.g., by hooks, carabiner or the like.

When the holding device is attached to the lifting device and the object is attached to the holding device, the lifting device moves the holding device with the object above the deployment position of the object, e.g., the platform of the wind turbine.

For heave compensation, the control device operates the winches of the holding device. Thus, the object is kept in the predetermined orientation, e.g., a horizontal alignment, with respect to the platform. Furthermore, the object is placed onto the platform. Preferably, the heave compensation is performed until the object is securely placed on the platform.

The method for placing an object onto a platform of an offshore wind turbine according to the invention has all the advantages that have already been described for a holding device according to the first aspect of the invention. Accordingly, the method according to the invention has the advantage over conventional methods that in a simple and inexpensive way, a heave compensation is provided. By operating the winches independently, the control device can compensate a relative movement of the lifting device to the offshore platform. Thus, expensive vessels with heave compensation cranes or jack up vessels can be replaced by standard vessels with standard cranes. Moreover, since the holding device can be manufactured at relatively low costs, the availability of the holding device is relatively high compared to standard offshore lifting solutions. Therefore, placing operations of different objects can be performed simultaneously by the use of more vessels.

It is preferred that the placing of the object on the deployment position is at least partially performed by the winches. In other words, the winches are operated for providing at least two different technical functions. According to a first technical function, the winches are operated for providing heave compensation for the object, in order to keep the object in a predetermined alignment to the platform. This usually implies a forward and backward movement and/or movement at different speeds of the winches. According to a second technical function, the winches are operated for lowering the object in the direction of the platform. Preferably, both technical functions are performed simultaneously with superimposed movement. This has the advantage that in a simple and inexpensive way, the quality of the placing process of the object onto the platform is further improved.

Further preferred, the placing of the object on the deployment position is at least partially performed by the lifting device. This means that the lifting device lowers the object while the holding device is providing the heave compensation.

Preferably, the holding device just provides for the heave compensation in order to avoid unwanted swinging of the object. Alternatively, the lifting device can lower the object together with the holding device. Thus, the deployment time for deploying the object onto the platform can be reduced. This has the advantage that in a simple and inexpensive way, the quality of the placing process of the object onto the platform is further improved.

Preferably, sensors are used to determine a relative position of the object to the platform, wherein the operating of the winches by the control device to keep the object in a predetermined orientation with respect to the platform is performed based on the determined relative position. With the usage of the sensors for determining the relative position of the object to the platform, information is acquired on the rocking motion of the object due to sea disturbance and wind. Moreover, the quality heave compensation performed by the winches can be monitored online. Thus, heave compensation errors can be identified and corrected in real time. This has the advantage that in a simple and inexpensive way, the quality of the placing process of the object onto the platform is further improved.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
Figure 1 shows a schematic perspective view of a lifting device with heave compensation according to the prior art,
Figure 2 shows a schematic side view of a jack up vessel according to the prior art,
Figure 3 shows a schematic perspective view of a preferred embodiment of a holding device according to the invention in a first state,
Figure 4 shows a schematic perspective view of the holding device of figure 3 in a second state and
Figure 5 shows a schematic process chart of a method according to a preferred embodiment of the invention.

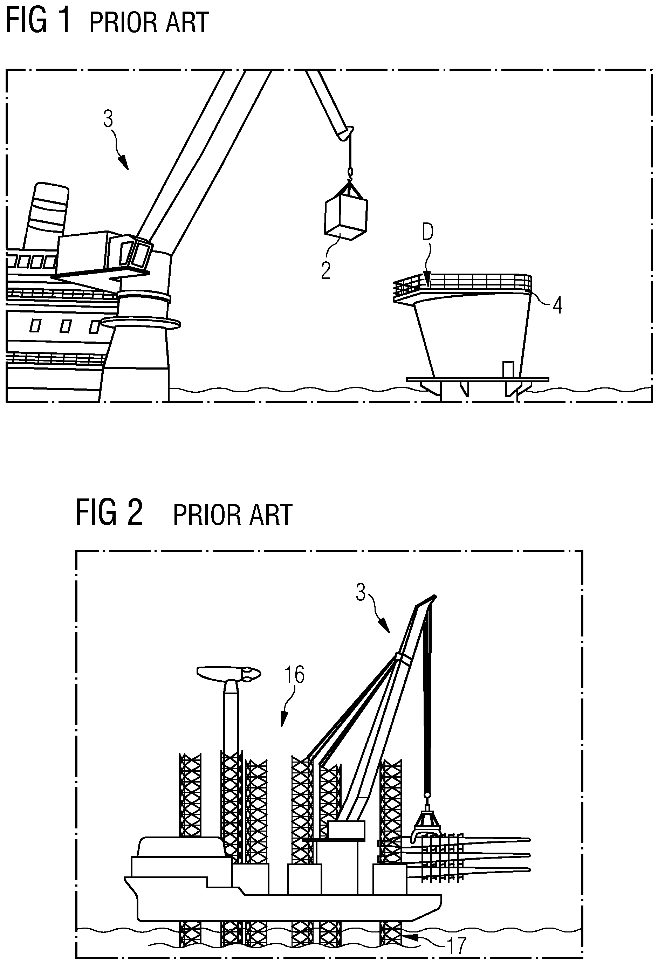

Elements with the same function and effectiveness are denoted each in figs. 1 - 5 with the same reference numbers.

In fig. 1, a lifting device 3 with heave compensation according to the prior art is shown in a schematic perspective view. The lifting device 3 is arranged on deck of a vessel and, therefore, exposed to sea disturbances. The lifting device 3 is configured as a heave compensating crane and used for placing an object 2 onto a deployment position D of an offshore platform 4. In this example, the object 2 is a container.

Fig. 2 shows a schematic side view of a jack up vessel 16 according to the prior art with a mounted lifting device 3. The lifting device 3 is configured as a standard crane. The jack up vessel 16 is jacked up on a strutting 17 and, thus, is not exposed to sea disturbances anymore. Therefore, there is no necessity for the lifting device 3 for heave compensation.

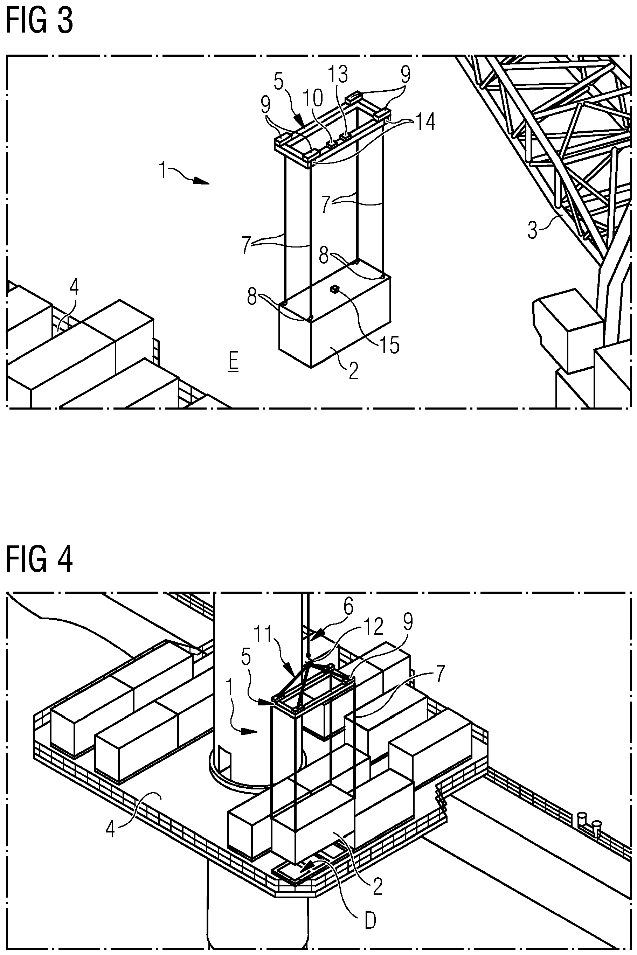

In fig. 3, a preferred embodiment of a holding device 1 according to the invention in a first state is shown in a schematic perspective view.

In fig. 4, the holding device 1 of fig. 3 is shown in a second state in a schematic perspective view. The holding device 1 comprises a main structure 5, which is configured as a rectangular frame. In each corner of the main structure 5, a winch 9 with a holding rope 7 is arranged. The holding ropes 7 are attached to attachment spots 8 of an object 2. In this example, the object 2 is configured as a container. On top of the object 2, an optional sensing device 15 for sensing a horizontal alignment of the object 2 is arranged.

For operating the winches 9, a control device 10 is provided. In this example, the control device 10 is arranged at the main structure 5, e.g., inside a profile beam of the main structure 5. For providing electricity for the winches 9 and the control device 10, an optional battery 13 is arranged at the main structure 5, e.g., inside a profile beam of the main structure 5. Alternatively or additionally, a generator could be provided, e.g., at the main structure 5, especially inside a profile beam of the main structure 5. In this example, the control device 10 is configured for operating the winches based on sensing data of the sensing device 15.

Moreover, a plurality of sensors 14 is arranged at the main structure 5. In this case, the sensors 14 are arranged at corner sections of the main structure 5. The sensors 14 are configured for sensing the object 2 and/or an environment of the object 2, especially the platform 4 of the offshore wind turbine. In this example, the control device 10 is configured for operating the winches based on sensor data of the sensors 14.

Furthermore, the holding device 1 comprises an adapter device 11 with four straps, attached to corners of the main structure 5. The adapter device 11 is attached to a load hook 12 of a lifting part 6 of the lifting device 3. By these means, the holding device 1 is moveable by the lifting device.

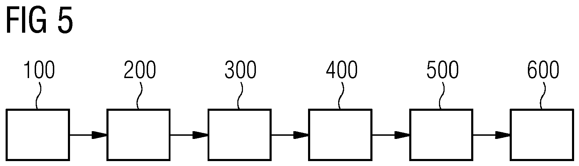

Fig. 5 shows a schematic process chart of a method according to a preferred embodiment of the invention. According to a first method action 100, a lifting device 3 is provided at an installation site of an offshore wind turbine on a floating vessel. The lifting device 3 is a standard crane without an integrated heave compensation system. The lifting device comprises a lifting part 6 with a load hook 12. At the load hook 12, an adapter device 11 of a holding device 1 according to the invention is attached. In a second method action 200, the object 2 is fixed to the plurality of holding ropes 7. Preferably, each holding rope 7 comprises a carabiner or hook, which is attached to an attachment spot 8, e.g., an eye, of the object 2.

In a third method action 300, the holding device 1 is lifted together with the object 2 by the lifting device 3. According to a fourth method action 400, the lifting device 3 moves the object 2 above a deployment position D of a platform 4 of the wind turbine. The deployment position D is a position of the platform 4, where the object 2 has to be deployed. In a fifth method action 500, the control device 10 operates the winches 9 to keep the object 2 in a predetermined orientation with respect to the platform 4. Thus, a heave compensation is provided. In a sixth method action 600, the object 2 is placed onto the deployment position D of the platform 4. The lowering of the object 2 can be done by the lifting device 3 and/or the holding device 1.

## Claims

1. Holding device (1) for attaching an object (2) to a lifting device (3) and for placing the object (2) onto a platform (4) of an offshore wind turbine, comprising a main structure (5) for being attached to a lifting part (6) of the lifting device (3) and a plurality of holding ropes (7) for being attached to attachment spots (8) of the object (2), wherein the holding ropes (7) are attached to the main structure (5) mutually spaced-apart,
**characterized in**
**that** the holding ropes (7) of the plurality of holding ropes (7) are attached to the main structure (5) by a plurality of winches (9), wherein the winches (9) are configured for being operated independently by a control device (10), wherein the control device (10) is configured to operate the winches (9) in a way to compensate a swinging movement of the lifting device (3).

2. Holding device (1) according to claim 1,
**characterized in**
**that** the main structure (5) is configured as a frame, wherein the winches (9) are arranged at corners of the main structure (5).

3. Holding device (1) according to claim 1 or 2,
**characterized in**
**that** the main structure (5) comprises an adapter device (11) for being coupled to a load hook (12) of the lifting device (3).

4. Holding device (1) according to any of the previous claims,
**characterized in**
**that** the control device (10) is configured to operate the winches (9) in a way to keep the main structure (5) in a horizontal alignment.

5. Holding device (1) according to any of the previous claims,
**characterized in**
**that** a generator and/or a battery (13) is arranged at the main structure (5) for providing the winches (9) with electricity.

6. Holding device (1) according to any of the previous claims,
**characterized in**
**that** the control device (10) is arranged at the main structure (5).

7. Holding device (1) according to any of the previous claims,
**characterized in**
**that** a sensor (14)is arranged at the main structure (5) for detecting an environment (E) of the main structure (5).

8. Holding device (1) according to claim 7,
**characterized in**
**that** the sensor (14) is configured for detecting the object (2) to be lifted and/or for detecting an environment (E) of the object (2) to be lifted.

9. Holding device (1) according to any of the previous claims,
**characterized in**
**that** the holding device (1) comprises a sensing device (15) for being attached to the object (2) to be lifted, for sensing an alignment of the object (2) to be lifted to a horizontal plane.

10. Holding device (1) according to any of the previous claims,
**characterized in**
**that** the holding ropes (7) comprise a steel wire and/or a dyneema rope.

11. Holding device (1) according to any of the previous claims,
**characterized in**
**that** the holding device (1) comprises four holding ropes (7) and four winches (9), wherein the winches (9) are equally arranged at the main structure (5).

12. Method for placing an object (2) onto a platform (4) of an offshore wind turbine, the method comprising:
- Providing a lifting device (3) with a holding device (1) according to any of the previous claims,
- fixing the object (2) to the plurality of holding ropes (7),
- lifting the holding device (1) together with the object (2) by the lifting device (3),
- moving the object (2) above a deployment position (D) by the lifting device (3),
- operating the winches (9) by the control device (10) to keep the object (2) in a predetermined orientation with respect to the platform (4) and
- placing the object (2) onto the deployment position (D).

13. Method according to claim 12,
**characterized in**
**that** the placing of the object (2) on the deployment position (D) is at least partially performed by the winches (9).

14. Method according to claim 12 or 13,
**characterized in**
**that** the placing of the object (2) on the deployment position (D) is at least partially performed by the lifting device (3).

15. Method according to any of claims 12 to 14,
**characterized in**
**that** sensors (14) are used to determine a relative position of the object (2) to the platform (4), wherein the operating of the winches (9) by the control device (10) to keep the object (2) in a predetermined orientation with respect to the platform (4) is performed based on the determined relative position.
